(19)

(11) **EP 2 702 858 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**07.10.2020 Patentblatt 2020/41**

(45) Hinweis auf die Patenterteilung:
**01.11.2017 Patentblatt 2017/44**

(21) Anmeldenummer: **13171579.9**

(22) Anmeldetag: **12.06.2013**

(51) Int Cl.:
***A01D 43/08*** *(2006.01)* ***A01D 41/127*** *(2006.01)*

(54) **Erntemaschine mit Gutzufuhrregelung**

Harvesting machine with goods supply control

Moissonneuse agricole avec régulation de l'acheminement de produits

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.08.2012 DE 102012017149**

(43) Veröffentlichungstag der Anmeldung:
**05.03.2014 Patentblatt 2014/10**

(73) Patentinhaber: **CLAAS Selbstfahrende Erntemaschinen GmbH**
**33428 Harsewinkel (DE)**

(72) Erfinder:
- **Kriebel, Bastian**
**48155 Münster (DE)**
- **Diekhans , Norbert**
**33335 Gütersloh (DE)**

(74) Vertreter: **CLAAS Gruppe**
**Mühlenwinkel 1**
**33428 Harsewinkel (DE)**

(56) Entgegenhaltungen:
**EP-A1- 1 402 768** **EP-A1- 1 419 687**
**EP-A1- 2 168 420** **EP-A1- 2 377 385**
**EP-A2- 1 271 139** **EP-A2- 2 042 019**
**EP-A2- 2 151 156** **EP-A2- 2 218 320**
**EP-A2- 2 286 657** **WO-A1-02/056672**
**DE-A1- 19 509 496** **DE-A1- 19 932 272**
**DE-B- 1 199 039**

**EP 2 702 858 B2**

## Beschreibung

Die vorliegende Erfindung betrifft eine selbstfahrende Erntemaschine wie etwa einen Feldhäcksler oder Mähdrescher. Eine solche Erntemaschine umfasst im Allgemeinen ein Eingangsaggregat, zu dem ein in Anpassung an das Erntegut austauschbarer Erntevorsatz gehört, sowie ein Verarbeitungsaggregat, das wenigstens ein Häcksel- oder Dreschwerk umfasst.

Um eine hohe und konstante Qualität der Verarbeitung durch das Verarbeitungsaggregat zu gewährleisten, ist es wünschenswert, diesem einen Strom von Erntegut von gleichbleibender Stärke zuführen zu können. Zu diesem Zweck ist es bekannt, die Vorfahrgeschwindigkeit der Erntemaschine entgegengesetzt proportional zur Bestandsdichte des Ernteguts auf dem Feld zu regeln. Schwierigkeiten ergeben sich jedoch, wenn die Dichte des zu erntenden Bestands kurzfristig schwankt. Wenn die Erntemaschine plötzlich in einen Bereich hoher Bestandsdichte einfährt, kann, bevor die Vorfahrgeschwindigkeit angepasst werden kann, der Erntegutdurchsatz im Eingangsaggregat so zunehmen, dass das Verarbeitungsaggregat ihn nicht mehr bewältigen kann. Insbesondere bei einem Feldhäcksler kann dies zum Abfinaler anmeldungstext

würgen des Motors führen; im Falle eines Mähdreschers kann die Folge sein, dass ein hoher Anteil an Nichtkornmaterial in den Korntank gelangt und/oder eine große Menge an Korn mit Spreu und Halmen ausgeschieden wird.

Um auf solche Schwankungen der Bestandsdichte reagieren zu können, ist es an sich wünschenswert, sie frühzeitig, nach Möglichkeit noch vor dem Einfahren der Erntemaschine in den Bereich hoher Bestandsdichte, zu erkennen, um die Vorfahrgeschwindigkeit rechtzeitig anpassen zu können. Eine solche - notwendigerweise berührungslose - Erfassung ist mit erheblichen Unsicherheiten verbunden. Ein Beispiel ist aus EP 1 271 139 A2 bekannt. Die hohen Kosten dieser Technik haben ihrer Verbreitung bislang im Wege gestanden. EP-A-2286657 offenbart eine Erntemaschine gemäss dem Oberbegriff des Anspruchs 1. Aufgabe der Erfindung ist daher, eine selbstfahrende Erntemaschine zu schaffen, die mit einfachen und zuverlässigen Mitteln eine Vergleichmäßigung der Erntegutzufuhr zu einem Verarbeitungsaggregat ermöglicht ohne dabei zu einem Abwürgen des Antriebsmotors zu führen. Die Aufgabe wird durch eine selbstfahrende Erntemaschine gemäss Anspruch 1 gelöst. Auch wenn die Mittel zum Abschätzen des Erntegutdurchsatzes eine durch das Einfahren der Erntemaschine in einen Bereich hoher Bestandsdichte verursachte Verstärkung des Erntegutstroms erst erfassen, kurz bevor dieser das Verarbeitungsaggregat erreicht, kann durch Verlangsamen des Eingangsaggregats die Zufuhrrate des Ernteguts zum Verarbeitungsaggregat in einem zulässigen Bereich gehalten oder zumindest in ihrer Schwankungsbreite erheblich reduziert werden. Zwar führt die Verlangsamung des Eingangsaggregats wiederum zu einer Schichtdickenverstärkung des Erntegutstroms im Eingangsaggregat, doch kann dem durch das Ausmaß, in dem die Vorfahrgeschwindigkeit reduziert wird, Rechnung getragen werden.

In der Praxis ist das in seiner Antriebsgeschwindigkeit variable Eingangsaggregat als ein in Anpassung an das zu verarbeitende Erntegut austauschbarer Erntevorsatz ausgebildet. Grundsätzlich können aber auch nicht austauschbare Komponenten des Erntefahrzeugs, die das Erntegut dem Verarbeitungsaggregat zufördern, dem Antriebsaggregat zuzurechnen und in ihrer Geschwindigkeit variabel sein.

Während eine verringerte Vorfahrgeschwindigkeit zweckmäßigerweise solange bestehen bleiben sollte, bis der Bereich hoher Bestandsdichte durchfahren ist, sollte die Antriebsgeschwindigkeit der Erntegutfördermittel des Eingangsaggregats zweckmäßigerweise nach einer vorgegebenen Zeitspanne wieder rückgängig gemacht werden, wenn ein Abschnitt des Erntegutstroms mit hoher Schichtdicke, der im Eingangsaggregat durch das Einfahren in den Bereich hoher Bestandsdichte vor dem Herabsetzen der Vorfahrgeschwindigkeit entstanden ist, verarbeitet ist.

Dementsprechend sollte die Zeitspanne, nach der die Herabsetzung der Vorfahrgeschwindigkeit rückgängig gemacht wird, wenigstens der Durchlaufzeit des Ernteguts durch das Eingangsaggregat entsprechen.

Wenn nach Verarbeitung des Abschnitts hoher Schichtdicke die Antriebsgeschwindigkeit des Eingangsaggregats niedrig bleibt, hat dies ein unerwünschtes Absinken der Zufuhrrate zum Verarbeitungsaggregat zur Folge. Daher sollte die Antriebsgeschwindigkeit nach Verarbeitung des Abschnitts erhöhter Schichtdicke möglichst schnell, spätestens nach der 1½fachen Durchlaufzeit, wieder auf den Ursprungswert zurückkehren.

Wenn die Herabsetzung der Antriebsgeschwindigkeit rückgängig gemacht wird, dann hat dies eine Verringerung der Schichtdicke des Erntegutstroms im Eingangsaggregat zur Folge, der mit einer gewissen Verzögerung von den Mitteln zum Abschätzen des Erntegutdurchsatzes wahrgenommen wird und sich nach der Durchlaufzeit auch auf die Zufuhrrate zum Verarbeitungsaggregat auswirkt. Damit dies nicht eine Mehrzahl von sukzessiven Geschwindigkeitsanpassungen nach sich zieht, kann die Steuereinheit eingerichtet sein, auf eine Änderung des Erntegutdurchsatzes in einer vorgegebenen Zeitspanne nach Rückgängigmachung der Herabsetzung der Antriebsgeschwindigkeit nicht zu reagieren. Erfindungsgemäss wird zeitgleich mit der Rückgängigmachung der Herabsetzung der Antriebsgeschwindigkeit auch die Herabsetzung der Vorfahrgeschwindigkeit rückgängig gemacht. Wenn die dabei auftretenden relativen Änderungen der Vorfahrgeschwindigkeit und der Antriebsgeschwindigkeit gleich sind, kann eine Unstetigkeit der Schichtdicke des Erntegutstroms vermieden werden.

Wenn die Erntemaschine einen Bereich hoher Bestandsdichte wieder verlässt, führt dies zunächst zu einer Verringerung der Schichtdicke des sich durch das Eingangsaggregat ausbreitenden Erntegutstroms. Da in diesem Fall keine Gefahr eines Abwürgens des Motors besteht, kann eine gleichzeitige Änderung der Antriebsgeschwindigkeit des Eingangsaggregats in diesem Fall unterbleiben.

Um den Erntegutdurchsatz abzuschätzen, kann ein Sensor zum Erfassen eines am Eingangsaggregat den Erntegutstrom antreibenden Drehmoments vorgesehen sein.

Der Erntegutdurchsatz kann auch anhand seiner Geschwindigkeit und seiner Querschnittsabmessungen abgeschätzt werden. Da die Breite des Stroms in der Regel durch die Bauart des Eingangsaggregats vorgegeben ist, kommt hier insbesondere ein Sensor zum Erfassen der Dicke des in dem Eingangsaggregat geförderten Erntegutstroms in Betracht.

Da sich die Dicke des Erntegutstroms im Eingangsaggregat bzw. das zu seiner Förderung erforderliche Drehmoment auch auf die Motorlast auswirken, kann auch aus dieser auf den Erntegutdurchsatz geschlossen werden.

Weitere Merkmale und Vorteile der Erfindung ergeben sich aus der nachfolgenden Beschreibung von Ausführungsbeispielen unter Bezugnahme auf die beigefügten Figuren. Es zeigen:

Fig. 1 eine schematische Darstellung eines erfindungsgemäßen Feldhäckslers;

Fig. 2 ein Blockdiagramm des Antriebssystems des Feldhäckslers;

Fig. 3 ein Beispiel für die zeitliche Entwicklung von Betriebsgrößen des Feldhäckslers gemäß einer ersten Ausgestaltung der Erfindung; und

Fig. 4 die zeitliche Entwicklung von Betriebsgrößen des Feldhäckslers gemäß einer zweiten Ausgestaltung.

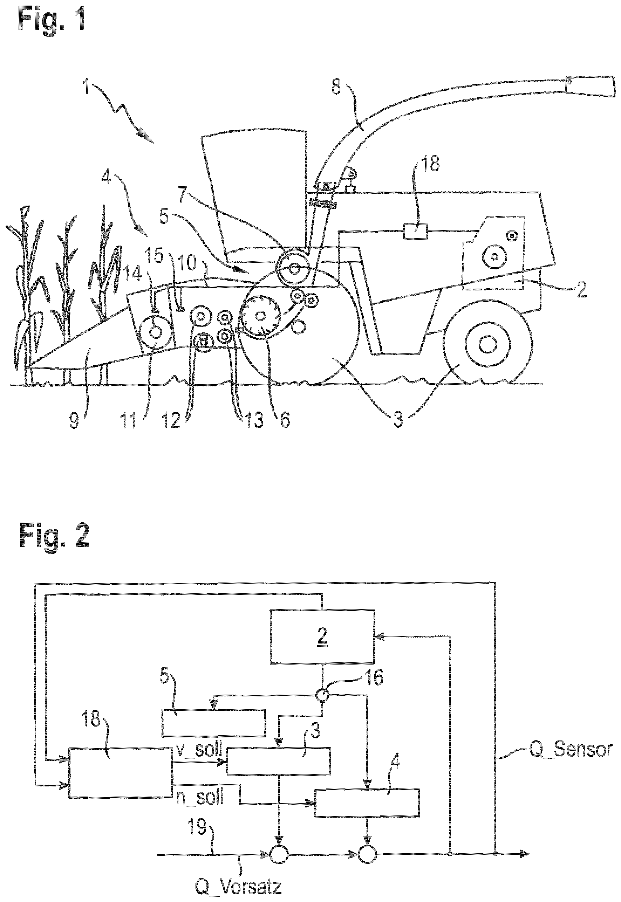

Fig. 1 zeigt als Beispiel für eine selbstfahrende Erntemaschine im Sinne der vorliegenden Erfindung einen Feldhäcksler 1. Ein Dieselmotor 2 treibt über ein an sich bekanntes, nicht dargestelltes Verteilergetriebe einerseits ein Fahrwerk 3 und andererseits ein Eingangsaggregat 4 sowie ein Verarbeitungsaggregat 5 an.

In dem hier als Beispiel betrachteten Fall des Feldhäckslers 1 umfasst das Verarbeitungsaggregat 5 eine Häckseltrommel 6, ein Walzenpaar 13, das durch das Eingangsaggregat 4 zugeführtes Pflanzenmaterial der Häckseltrommel 6 zuführt, und einen Nachbeschleuniger 7, der dem gehäckselten Pflanzenmaterial die nötige Geschwindigkeit verleiht, um einen Auswurfkrümmer 8 zu durchlaufen und in ein (nicht dargestelltes) Begleitfahrzeug übergeladen zu werden. Das Verhältnis der Geschwindigkeiten von Walzenpaar 13 und Häckseltrommel bestimmt die Qualität, genauer gesagt die Schnittlänge des gehäckselten Pflanzenmaterials. Um die Schnittlänge einzustellen, kann das Verhältnis der Geschwindigkeiten veränderbar sein; während eines Ernteeinsatzes sollten jedoch die Geschwindigkeiten in einem festen Verhältnis zueinander stehen, um die Qualität des gehäckselten Materials konstant zu halten.

Andere Typen von selbstfahrenden Erntemaschinen wie etwa Mähdrescher oder Ballenpressen unterscheiden sich in ihrem Verarbeitungsaggregat, gemeinsam ist ihnen jedoch, dass die Zufuhrrate des zu verarbeitenden Materials zum Verarbeitungsaggregat einen Grenzwert nicht überschreiten sollte, um eine befriedigende Verarbeitungsqualität sicherzustellen bzw. ein Steckbleiben des Verarbeitungsaggregats 5 und ein daraus resultierendes Abwürgen des Dieselmotors 2 zu vermeiden.

Das Eingangsaggregat 4 umfasst in an sich bekannter Weise einen in Anpassung an das zu bergende Pflanzenmaterial austauschbaren Erntevorsatz 9, der über eine nicht dargestellte Zapfwelle mit einer unabhängig von der Geschwindigkeit der Häckseltrommel 6 variablen Geschwindigkeit antreibbar ist. Ein nicht austauschbarer Schrägförderer 10 fördert das vom Erntevorsatz 9 geborgene Pflanzenmaterial der Häckseltrommel 6 zu. Er umfasst mehrere hintereinander am Förderweg des Ernteguts angeordnete Fördermittel, darunter das bereits erwähnte Walzenpaar 13 sowie, in der Darstellung der Fig. 1, wenigstens ein diesem vorgelagertes Walzenpaar 12. Wenn wie oben erläutert die Geschwindigkeit des Walzenpaars 13 an die der Häckseltrommel gekoppelt ist, dann ist es dem Verarbeitungsaggregat 5 zuzurechnen. Die Geschwindigkeit des vorgelagerten Walzenpaars 12 kann an die Geschwindigkeit der Häckseltrommel 6 oder die der Zapfwelle gekoppelt sein; in ersterem Falle ist das Walzenpaar 12 dem Eingangsaggregat 4, im anderen dem Verarbeitungsaggregat 5 zuzurechnen. Der Schrägförderer 10 kann auch zur Gänze zum Eingangsaggregat 4 gehören, wenn die Geschwindigkeit beider Walzenpaare 12, 13 an die Geschwindigkeit der Zapfwelle gekoppelt ist.

Der Erntevorsatz 9 ist an seiner sich im Allgemeinen über eine Breite von mehreren Metern erstreckenden Vorderkante mit (in der Figur nicht dargestellten) angetriebenen Messern zum Kappen der Stängel des zu bergenden Pflanzenmaterials besetzt. Eine sich über die gesamte Breite des Erntevorsatzes 9 erstreckende Förderschnecke 11 dient dazu, das Pflanzenmaterial zur Mitte des Erntevorsatzes 9 zusammenzuschieben, wo es an den Schrägförderer 10 übergeben wird.

Die Messer und die Förderschnecke 11 des Erntevorsatzes sind mit dem Motor 2 über eine in der Fig. nicht dargestellte Zapfwelle verbunden. Das von ihnen ausgeübte Drehmoment ist proportional zur Menge des Pflanzenmaterials im Erntevorsatz 9, und seine Messung mittels eines Drehmomentsensors 14 erlaubt eine Abschätzung des Gutdurchsatzes im Vorsatz 9. Fig. 1 zeigt diesen Sensor 14 an der Förderschnecke 11 des Vorsatzes 9; zweckmäßig ist aber auch eine Platzierung unmittelbar an der Zapfwelle.

Alternativ oder ergänzend kann am Weg des Ernteguts durch den Feldhäcksler 1 ein Sensor 15, insbesondere ein optischer Sensor, zum Erfassen der Schichtdicke des Erntegutstroms vorgesehen sein. Der Sensor 15 sollte möglichst weit vorn am Weg des Ernteguts platziert sein, um Änderungen des Erntegutstroms möglichst frühzeitig zu erfassen. Um den vollständigen, über die gesamte Breite des Vorsatzes 9 verteilt aufgenommenen Strom zu erfassen, ist der Sensor 15 vorzugsweise wie gezeigt am Eingang des Schrägförderers 10 angeordnet.

Das Produkt aus vom Sensor 15 erfasster Schichtdicke und Fördergeschwindigkeit des Materials ist proportional zum Durchsatz.

Das zum Antreiben der Walzenpaare 12, 13 aufgewandte Drehmoment hängt ebenfalls zusammen mit dem Materialdurchsatz des Eingangsaggregats 4. Daher kann auch ein an einem der Walzenpaare 12, 13 angebrachter Drehmomentsensor zur Abschätzung des Durchsatzes des Eingangsaggregats 4 dienen. Die Messung des Zapfwellen-Drehmoments ist jedoch bevorzugt, da dieses schneller auf eine Änderung der Bestandsdichte des Ernteguts reagiert.

Fig. 2 zeigt ein Blockdiagramm des Antriebssytems des Feldhäckslers 1. Das Drehmoment des Dieselmotors 2 verteilt sich über ein Verteilergetriebe 16 auf das Fahrwerk 3, das Eingangsaggregat 4 und das Verarbeitungsaggregat 5. Da das Ziel der Steuerung des Feldhäckslers 1 ist, die Zufuhrrate des Pflanzenmaterials, symbolisiert durch einen Pfeil 19 am unteren Rand der Fig. 2, zum Verarbeitungsaggregat 5 konstant zu halten, kann der Anteil der Motorleistung, die vom Verarbeitungsaggregat 5 beansprucht wird, um das mit im wesentlichen konstanter Rate zugeführte Material zu verarbeiten, als konstant angenommen werden. Die Leistung, die Fahrwerk 3 und Eingangsaggregat 4 benötigen, um Material mit dieser konstanten Rate zu liefern, kann variieren. Ein elektronischer Vorfahrtregler 18 gibt Sollwerte n_soll, v_soll für die Drehzahl der das Eingangsaggregat 4 antreibenden Zapfwelle bzw. die Fahrgeschwindigkeit des Feldhäckslers 1 aus. In der schematischen Darstellung der Fig. 2 werden diese Sollwerte vom Eingangsaggregat 4 bzw. Fahrwerk 3 empfangen. In der Praxis können sie auch von einer Steuereinheit des Verteilergetriebes 16 bzw. des Dieselmotors 2 empfangen werden, um das Verhältnis, mit dem die Motorleistung auf Eingangsaggregat 4 und Fahrwerk 3 übertragen wird, sowie die Gesamtleistung des Dieselmotors 2 so zu regeln, dass die Sollwerte n_soll, v_soll bei stationären Betriebsbedingungen eingehalten werden.

Ein Pfeil 19 am unteren Rand der Fig. 2 bezeichnet das Erntegut, das von dem Feldhäcksler laufend aufgenommen wird. Die tatsächliche Vorfahrgeschwindigkeit v_ist des Feldhäckslers 1 bestimmt die Rate Q_Vorsatz, mit der das Erntegut in den Erntevorsatz 9 eintritt. Zeitweilige Änderungen der Drehzahl n_ist der Zapfwelle können dazu führen, dass die Rate, mit der das Erntegut das Verarbeitungsaggregat 5 erreicht, von der Aufnahmerate Q_Vorsatz abweicht.

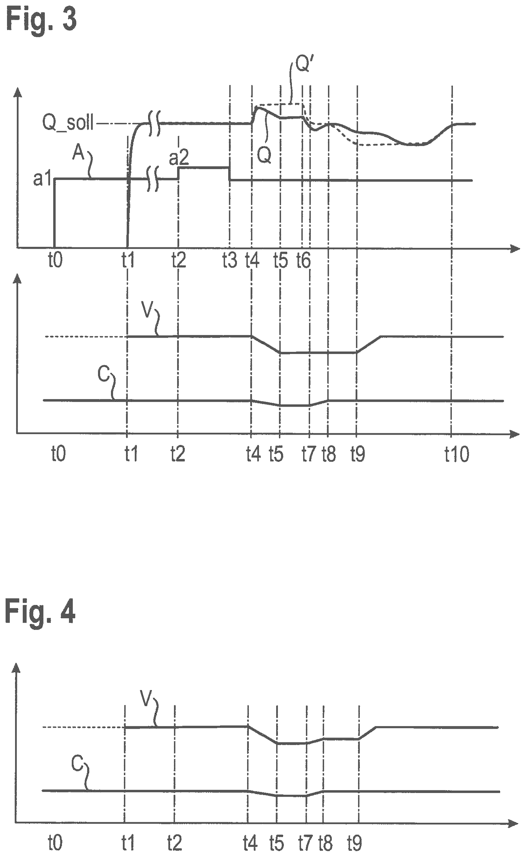

Fig. 3 verdeutlicht die Arbeitsweise des Vorfahrtreglers 18 anhand von exemplarischen Zeitdiagrammen. Eine Kurve A stellt die Dichte a eines abzuerntenden Pflanzenbestandes (angegeben z.B. in t/ha) dar. Solange sich der Feldhäcksler 1 außerhalb des Bestandes bewegt, vor dem Zeitpunkt t0 der Fig. 3, ist die Bestandsdichte 0; mit dem Eintritt in den Bestand springt sie auf einen hier der Einfachheit halber als konstant angenommenen Wert a1. Die Rate, mit der Pflanzenmaterial vom Erntevorsatz 9 aufgenommen wird, ergibt sich dann zu

$$Q_Vorsatz = a * b * v_ist$$

wobei b die Breite des Erntevorsatzes und v_ist die tatsächliche Vorfahrgeschwindigkeit des Feldhäckslers 1 ist. Das ab dem Zeitpunkt t0 vom Erntevorsatz 9 aufgenommene Pflanzenmaterial braucht eine gewisse Zeit bis zum Zeitpunkt t1, um den Erntevorsatz 9 zu durchlaufen und den Sensor 15 zu erreichen. Bis zum Zeitpunkt t1 ist daher eine sinnvolle Steuerung der Vorfahrgeschwindigkeit des Feldhäckslers 1 durch den Vorfahrtregler 18 noch nicht möglich, wie durch einen gestrichelten Verlauf der die Vorfahrgeschwindigkeit repräsentierenden Kurve V dargestellt. In der Darstellung der Fig. 3 ist vereinfachend angenommen, dass die Vorfahrgeschwindigkeit von Anfang an passend zur Bestandsdichte a1 so abgestimmt ist, dass die Zufuhrrate des Ernteguts zum Verarbeitungsaggregat 5, dargestellt durch eine Kurve Q, einem Sollwert Q_Soll entspricht. (Wäre dies nicht der Fall, dann würde der Vorfahrtregler 18 in an sich bekannter Weise im Laufe der Zeit die Vorfahrgeschwindigkeit anpassen, bis der Sollwert Q_Soll erreicht ist.)

Zum Zeitpunkt t2 erreicht der Feldhäcksler 1 einen Bereich erhöhter Bestandsdichte a2. Dies führt zu einer Verstärkung des Materialstroms Q_Vorsatz am Eingang des Erntevorsatzes 9, die sich allerdings nicht auf die vom Sensor 15 erfasste Rate Q_Sensor auswirkt, solange sie sich noch nicht zum Schrägförderer 10 ausgebreitet hat. Dies ist erst zum Zeitpunkt t4 der Fall. Der Vorfahrtregler 18 reagiert auf den Anstieg der Zufuhrrate Q_Sensor durch eine gleichzeitige Verringerung der Vorfahrgeschwindigkeit (siehe Kurve V) und der Zapfwellendrehzahl, dargestellt durch eine Kurve C. Proportional zur Verlangsamung des Feldhäckslers 1 nimmt auch die Rate Q_Vorsatz ab, mit der der Erntevorsatz 9 Pflanzenmaterial aufnimmt. Dies führt zu einer Verringerung der Schichtdicke des durch den Erntevorsatz 9 hindurch geförderten Materialstroms, die allerdings prozentual geringer ausfällt als die Verringerung der Vorfahrgeschwindigkeit, da die gleichzeitige Verlangsamung der Zapfwelle dazu führt, dass das Material langsamer durch den Erntevorsatz 9 gefördert wird.

Die Verzögerung der Zapfwelle hat zur Folge, dass das bereits mit großer Schichtdicke im Erntevorsatz befindliche Material verlangsamt an den Schrägförderer 10 übergeben wird. Die Rate Q_Sensor steigt daher nach t4 nur kurzzeitig auf ein Maximum und fällt dann proportional zur Verzögerung der Zapfwelle wieder ab, bis zum Zeitpunkt t5 der Sollwert Q_Soll, hier zuzüglich einer zulässigen Abweichung, wieder erreicht ist. So kann die im Erntevorsatz 9 mit großer Schichtdicke gespeicherte Materialmenge im Verarbeitungsaggregat 5 abgearbeitet werden, ohne dass das Verarbeitungsaggregat 5 überlastet wird, und das gleichzeitig in den Erntevorsatz 9 nachrückende Material bildet dort eine Schicht mit einer Dicke, die im Wesentlichen dieselbe ist wie im stationären Betrieb vor dem Zeitpunkt t2.

Eine Kurve Q' zeigt zum Vergleich die Rate Q_Sensor', die sich als Messwert des Sensors 15 ergeben würde, wenn die Geschwindigkeit der Zapfwelle in herkömmlicher Weise unabhängig von Q_Sensor' wäre: Ab t4 steigt die Rate Q_Sensor' entsprechend der Dichtezunahme von a1 auf a2 an und bleibt auf dem hohen Wert solange, bis sich eine Änderung der Schichtdicke bis zum Sensor 15 ausbreitet, die auf die Verringerung der Vorfahrgeschwindigkeit v ab dem Zeitpunkt t4 oder eine neuerliche Änderung der Bestandsdichte zurückzuführen ist

Zum Zeitpunkt t6 wird eine Abnahme der Zufuhrrate Q_Sensor beobachtet, die darauf zurückzuführen ist, dass der Feldhäcksler 1 den Bereich hoher Bestandsdichte zuvor, zum Zeitpunkt t3, bereits wieder verlassen hat und die daraus resultierende Verringerung der Schichtdicke sich nun bis zum Sensor 15 ausgebreitet hat. Diese Abnahme fällt zufällig hier zeitlich zusammen mit dem Beginn eines Anstiegs der Zapfwellengeschwindigkeit C zum Zeitpunkt t7. Dieser Anstieg ist vom Vorfahrtregler 18 zeitlich so gesteuert, dass mit Abschluss des Geschwindigkeitsanstiegs zum Zeitpunkt t8 das gesamte im Zeitintervall [t2, t3] geerntete Material den Erntevorsatz 9 verlassen hat. Wäre in dieser Zeit die Bestandsdichte konstant bei a2 geblieben, dann wäre nun die daraus resultierende dicke Materialschicht im Erntevorsatz 9 vollständig abgetragen, und indem die nun nachrückende dünnere Schicht durch die Beschleunigung der Zapfwelle schneller dem Schrägförderer 10 zugeführt wird, könnte dessen Zufuhrrate Q_Sensor konstant gehalten werden. Im hier betrachteten Fall wird zwar auch ein Anstieg der Zufuhrrate Q_Sensor zeitgleich zum Anstieg der Zapfwellengeschwindigkeit C beobachtet, doch kann dies die auf die Abnahme der Bestandsdichte von a2 auf a1 zurückzuführende Verringerung des Materialstroms im Erntevorsatz 9 nicht kompensieren, und es wird schließlich ein so niedriger Wert erreicht, dass zur Zeit t9 der Vorfahrtregler 18 auch die Vorfahrgeschwindigkeit wieder heraufsetzt.

Die Heraufsetzung der Vorfahrgeschwindigkeit erfolgt in Schritten; wenn die Vorfahrgeschwindigkeit geändert worden ist, bleibt sie unabhängig von der aktuellen Zufuhrrate Q_Sensor solange auf dem neu eingestellten Wert, bis sich dieser, hier zum Zeitpunkt t10, auf die Zufuhrrate ausgewirkt hat.

Fig. 4 zeigt die Kurven V, C gemäß einer Abwandlung der Erfindung. Bis zum Zeitpunkt t7 sind die Reaktionen des Vorfahrtreglers 18 auf die Änderungen der Bestandsdichte gemäß Kurve A dieselben wie im Falle der Fig. 3. Zeitgleich mit dem Anstieg der Zapfwellengeschwindigkeit C wird hier jedoch auch die Vorfahrgeschwindigkeit v prozentual im gleichen Maße hochgesetzt. Dies hat zur Folge, dass, wenn sich nicht gleichzeitig die Bestandsdichte ändert, auch die Schichtdicke des Erntegutstroms im Erntevorsatz 9 unverändert bleibt. Die Abnahme der Zufuhrrate Q_Sensor, die in Fig. 3 zwischen t9 und t10 zu beobachten ist und die auf die alleinige Beschleunigung der Zapfwelle zurückzuführen ist, kann dadurch vermieden werden.

Bei der obigen Beschreibung des Verhaltens des Vorfahrtreglers 18 wurde auf eine Messung des Erntegutstroms allein durch den Sensor 15 abgestellt. Es liegt jedoch auf der Hand, dass eine entsprechende Steuerung der Vorfahrgeschwindigkeit und der Zapfwellendrehzahl des Vorsatzantriebs auch auf der Grundlage einer mit Hilfe des Drehmomentsensors 14 abgeschätzten Zufuhrrate Q_Sensor durchführbar ist. Ein Vorzug des Drehmomentsensors 14 liegt darin, dass eine Änderung der Rate Q_Vorsatz sich auf den Messwert des Sensors 14 früher auswirkt als auf den des Sensors 15, nachteilig ist, dass kurzfristige Änderungen der Rate Q_Vorsatz sich im Messwert des Sensors 14 schwächer bemerkbar machen als in dem des Sensors 15. Natürlich könnte Q_Sensor auch aus einer Kombination von Messwerten beider Sensoren 14, 15 oder weiterer geeigneter Sensoren, insbesondere eines die Gesamtlast des Motors 2 erfassenden Sensors, abgeleitet werden.

**Bezugszeichen**

| | |
|---|---|
| 1 | Feldhäcksler |
| 2 | Dieselmotor |
| 3 | Fahrwerk |
| 4 | Eingangsaggregat |
| 5 | Verarbeitungsaggregat |
| 6 | Häckseltrommel |
| 7 | Nachbeschleuniger |
| 8 | Auswurfkrümmer |
| 9 | Erntevorsatz |
| 10 | Schrägförderer |
| 11 | Förderschnecke |
| 12 | Walzenpaar |
| 13 | Walzenpaar |
| 14 | Sensor |
| 15 | Sensor |
| 16 | Verteilergetriebe |
| 17 | Verteilergetriebe |
| 18 | Vorfahrtregler |
| 19 | Pfeil |

**Patentansprüche**

1. Selbstfahrende Erntemaschine mit einem Eingangsaggregat (4), das Mittel zum Aufnehmen von Erntegut von einem Feld und zum Fördern des Ernteguts (9) umfasst, einem Verarbeitungsaggregat (5), dem das Erntegut von dem Eingangsaggregat (4) zugefördert wird, Mitteln (14, 15) zum Abschätzen des Erntegutdurchsatzes des Eingangsaggregats (4) und einem Fahrantrieb (3), dessen Vorfahrgeschwindigkeit (V) in Abhängigkeit vom Erntegutdurchsatz variabel ist, wobei eine Antriebsgeschwindigkeit (C) des Eingangsaggregats (4) in Abhängigkeit vom Erntegutdurchsatz variabel ist, **dadurch gekennzeichnet, dass** eine mit den Mitteln (14, 15) zum Abschätzen verbundene Steuereinheit (18) eingerichtet ist, bei einem Anstieg des Erntegutdurchsatzes über einen oberen Grenzwert die Vorfahrgeschwindigkeit (V) und die Antriebsgeschwindigkeit (C) herabzusetzen, wobei die relative Änderung der Antriebsgeschwindigkeit (C) geringer ist als die relative Änderung der Vorfahrgeschwindigkeit (V).

2. Selbstfahrende Erntemaschine nach Anspruch 1, **dadurch gekennzeichnet, dass** das Eingangsaggregat (4) ein austauschbarer Erntevorsatz (9) ist.

3. Selbstfahrende Erntemaschine nach Anspruch 1, **dadurch gekennzeichnet, dass** das Eingangsaggregat (4) einen austauschbarer Erntevorsatz (9) und wenigstens ein zwischen dem Erntevorsatz (9) und dem Verarbeitungsaggregat (5) angeordnetes Fördermittel (12) umfasst.

4. Selbstfahrende Erntemaschine nach Anspruch 1, **dadurch gekennzeichnet, dass** die Steuereinheit (18) eingerichtet ist, die Herabsetzung der Antriebsgeschwindigkeit (C) nach einer vorgegebenen Zeitspanne rückgängig zu machen.

5. Selbstfahrende Erntemaschine nach Anspruch 4, **dadurch gekennzeichnet, dass** die vorgegebene Zeitspanne wenigstens der Durchlaufzeit des Ernteguts durch das Eingangsaggregat (4) entspricht.

6. Selbstfahrende Erntemaschine nach Anspruch 4 oder 5, **dadurch gekennzeichnet, dass** die Steuereinheit (18) eingerichtet ist, auf eine Änderung des Erntegutdurchsatzes in einer vorgegebenen Zeitspanne nach Rückgängigmachung der Herabsetzung nicht zu reagieren.

7. Selbstfahrende Erntemaschine nach Anspruch 4 oder 5, **dadurch gekennzeichnet, dass** die Steuereinheit (18) eingerichtet ist, nach der vorgegebenen Zeitspanne die Herabsetzung der Vorfahrgeschwindigkeit teilweise rückgängig zu machen.

8. Selbstfahrende Erntemaschine nach Anspruch 1 oder einem der Ansprüche 4 bis 7, **dadurch gekennzeichnet, dass** die Steuereinheit (18) eingerichtet ist, bei einem Absinken des Erntegutdurchsatzes unter einen unteren Grenzwert die Vorfahrgeschwindigkeit (V) heraufzusetzen und die Antriebsgeschwindigkeit (C) beizubehalten.

9. Selbstfahrende Erntemaschine nach einem der vorhergehenden Ansprüche, **dadurch gekennzeichnet, dass** die Mittel zum Abschätzen des Erntegutdurchsatzes einen Sensor (14) zum Erfassen eines an einem Mittel (11) zum Fördern des Ernteguts wirkenden Drehmoments umfassen.

10. Selbstfahrende Erntemaschine nach einem der vorhergehenden Ansprüche, **dadurch gekennzeichnet, dass** die Mittel zum Abschätzen des Erntegutdurchsatzes einen Sensor (15) zum Erfassen der Dicke eines in dem Eingangsaggregat (4) geförderten Erntegutstroms umfassen.

11. Selbstfahrende Erntemaschine nach einem der vorhergehenden Ansprüche, **dadurch gekennzeichnet, dass** die Mittel zum Abschätzen des Erntegutdurchsatzes eingerichtet sind, die Last eines das Eingangsaggregat (4) antreibenden Motors (2) zu erfassen.

**Claims**

1. A self-propelled harvester comprising an intake assembly (4) which has means for picking up crop material from a field and for conveying the crop material (9), a processing assembly (5) to which the crop material is conveyed from the intake assembly (4), means (14, 15) for estimating the crop material throughput of the intake assembly (4) and a travel drive (3) whose forward speed (V) is variable in dependence on the crop material throughput, wherein a drive speed (C) of the intake assembly (4) is variable in dependence on the crop material throughput, **characterised in that** a control unit (18) connected to the estimating means (14, 15) is adapted to reduce the forward speed (V) and the drive speed (C) upon an increase in the crop material throughput above an upper limit value, wherein the relative change in the drive speed (C) is less than the relative change in the forward speed (V).

2. A self-propelled harvester according to claim 1 **characterised in that** the intake assembly (4) is a replaceable front-mounted harvesting attachment (9).

3. A self-propelled harvester according to claim 1 **characterised in that** the intake assembly (4) is a replaceable front-mounted harvesting attachment (9) and includes at least one conveyor means (12) arranged between the front-mounted harvesting attachment (9) and the processing assembly (5).

4. A self-propelled harvester according to claim 1 **characterised in that** the control unit (18) is adapted to reverse the reduction in the drive speed (C) after a predetermined period of time.

5. A self-propelled harvester according to claim 4 **characterised in that** the predetermined period of time corresponds at least to the transit time of the crop material through the intake assembly (4).

6. A self-propelled harvester according to claim 4 or claim 5 **characterised in that** the control unit (18) is adapted to not react to a change in the crop material throughput in a predetermined period of time after reversal of the reduction.

7. A self-propelled harvester according to claim 4 or claim 5 **characterised in that** the control unit (18) is adapted to partially reverse the reduction in the travel speed after the predetermined period of time.

8. A self-propelled harvester according to claim 1 or one of claims 4 to 7 **characterised in that** the control unit (18) is adapted upon a reduction in the crop material throughput below a lower limit value to increase the forward speed (V) and maintain the drive speed (C).

9. A self-propelled harvester according to one of the preceding claims **characterised in that** the means for estimating the crop material throughput include a sensor (14) for detecting a torque acting at a means (11) for conveying the crop material.

10. A self-propelled harvester according to one of the preceding claims **characterised in that** the means for estimating the crop material throughput include a sensor (15) for detecting the thickness of a crop material flow conveyed in the intake assembly (4).

11. A self-propelled harvester according to one of the preceding claims **characterised in that** the means for estimating the crop material throughput are adapted to detect the load of an engine (2) driving the intake assembly (4).

## Revendications

1. Machine de récolte automotrice comprenant un organe d'entrée (4) qui comporte des moyens pour recevoir du produit récolté d'un champ et pour convoyer le produit récolté (9), un organe de traitement (5) auquel le produit récolté est convoyé par l'organe d'entrée (4), des moyens (14, 15) pour estimer le débit de produit récolté de l'organe d'entrée (4), et un groupe propulseur (3) dont la vitesse de marche avant (V) est variable en fonction du débit de produit récolté, une vitesse d'entraînement (C) de l'organe d'entrée (4) étant variable en fonction du débit de produit récolté, **caractérisée en ce qu'**une unité de commande (18) reliée aux moyens (14, 15) pour estimer est agencée pour réduire la vitesse de marche avant (V) et la vitesse d'entraînement (C) en cas d'augmentation du débit de produit récolté au-delà d'une valeur limite supérieure, la variation relative de la vitesse d'entraînement (C) étant inférieure à la variation relative de la vitesse de marche avant (V) .

2. Machine de récolte automotrice selon la revendication 1, **caractérisée en ce que** l'organe d'entrée (4) est un outil frontal interchangeable (9) .

3. Machine de récolte automotrice selon la revendication 1, **caractérisée en ce que** l'organe d'entrée (4) comporte un outil frontal interchangeable (9) et au moins un moyen de convoyage (12) disposé entre l'outil frontal (9) et l'organe de traitement (5).

4. Machine de récolte automotrice selon la revendication 1, **caractérisée en ce que** l'unité de commande (18) est agencée pour annuler la réduction de la vitesse de marche avant (C) après un intervalle de temps prédéfini.

5. Machine de récolte automotrice selon la revendication 4, **caractérisée en ce que** l'intervalle de temps prédéfini correspond au moins au temps de passage du produit récolté à travers l'organe d'entrée (4).

6. Machine de récolte automotrice selon la revendication 4 ou 5, **caractérisée en ce que** l'unité de commande (18) est agencée pour ne pas réagir à une variation du débit de produit récolté pendant un intervalle de temps prédéfini après l'annulation de la réduction.

7. Machine de récolte automotrice selon la revendication 4 ou 5, **caractérisée en ce que** l'unité de commande (18) est agencée pour annuler partiellement la réduction de la vitesse de marche avant après l'intervalle de temps prédéfini.

8. Machine de récolte automotrice selon la revendication 1 ou une des revendications 4 à 7, **caractérisée en ce que** l'unité de commande (18) est agencée pour réduire la vitesse de marche avant (V) et pour conserver la vitesse d'entraînement (C) en cas de baisse du débit de produit récolté sous une valeur limite inférieure.

9. Machine de récolte automotrice selon une des revendications précédentes, **caractérisée en ce que** les moyens pour estimer le débit de produit récolté comportent un capteur (14) pour détecter un couple de rotation agissant sur un moyen (11) de convoyage du produit récolté.

**10.** Machine de récolte automotrice selon une des revendications précédentes, **caractérisée en ce que** les moyens pour estimer le débit de produit récolté comportent un capteur (15) pour détecter l'épaisseur d'un flux de récolte convoyé dans l'organe d'entrée (4).

**11.** Machine de récolte automotrice selon une des revendications précédentes, **caractérisée en ce que** les moyens pour estimer le débit de produit récolté sont agencés pour détecter la charge d'un moteur (2) entraînant l'organe d'entrée (4).

# Fig. 1

1
8
18
4
7
5
15
10
14
2
9
11
12
13
6
3

# Fig. 2

2
5
16
18
3
v_soll
Q_Sensor
4
n_soll
19
Q_Vorsatz

Fig. 3

Q'
Q_soll
A
a2
a1
Q
t0
t1
t2
t3
t4
t5
t6
V
C
t0
t1
t2
t4
t5
t7
t8
t9
t10

Fig. 4

V
C
t0
t1
t2
t4
t5
t7
t8
t9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1271139 A2
- EP 2286657 A